# EUROPEAN PATENT APPLICATION

(11) **EP 4 843 660 A1**
(43) Date of publication of application: **25.11.2026**
(21) Application number: 25178348.6
(22) Date of filing: 22.05.2025
(51) Int. Cl.: B01D 53/94, B01J 23/42, B01J 29/76, B01J 35/00, B01J 35/57, F01N 3/10

(54) **AMMONIA SLIP CATALYST**

(71) Applicant: Johnson Matthey Public Limited Company, London EC2V 7AD (GB)
(72) Inventor: The designation of the inventor has not yet been filed
(74) Representative: Johnson Matthey Public Limited Company

(57) **Abstract**

The invention relates to a catalytic article comprising a substrate having an inlet and an outlet; a first coating comprising platinum on a support; and a second coating comprising a SCR catalyst; wherein the SCR catalyst comprises a Cu-loaded molecular sieve and Ce.

## Description

### Field of the invention

This invention relates to an ammonia slip catalyst with an improvement in secondary emissions with reduced NOx remake and reduced N₂O make.

### Background of the invention

Hydrocarbon combustion in engines, stationary gas turbines, and other systems generate exhaust gases that must be treated to remove nitrogen oxides (NOx), which comprise NO (nitric oxide) and NO₂ (nitrogen dioxide), with NO being the majority of the NOx formed. NOx is known to cause a number of health issues in people as well as causing a number of detrimental environmental effects including the formation of smog and acid rain. To mitigate both the human and environmental impact from NOₓ in exhaust gas, it is desirable to eliminate these undesirable components, preferably by a process that does not generate other noxious or toxic substances.

Exhaust gas generated in lean-burn and diesel engines is generally oxidative. NOx needs to be reduced selectively with a catalyst and a reductant in a process known as selective catalytic reduction (SCR) that converts NOx into elemental nitrogen (N₂) and water. In an SCR process, a gaseous reductant, typically anhydrous ammonia, aqueous ammonia, or urea, is added to an exhaust gas stream prior to the exhaust gas contacting the catalyst. The reductant is absorbed onto the catalyst and the NOₓ is reduced as the gases pass through or over the catalyzed substrate. In order to maximize the conversion of NOx, it is often necessary to add more than a stoichiometric amount of ammonia to the gas stream. However, release of the excess ammonia into the atmosphere would be detrimental to the health of people and to the environment. In addition, ammonia is caustic, especially in its aqueous form. Condensation of ammonia and water in regions of the exhaust line downstream of the exhaust catalysts can result in a corrosive mixture that can damage the exhaust system. Therefore, the release of ammonia in exhaust gas should be eliminated. In many conventional exhaust systems, an ammonia oxidation catalyst (also known as an ammonia slip catalyst or "ASC") is installed downstream of the SCR catalyst to remove ammonia from the exhaust gas by converting it to nitrogen. The use of ammonia slip catalysts can allow for NOₓ conversions of greater than 90% over a typical diesel driving cycle.

It would be desirable to have a catalyst that provides for both NOx removal by SCR and for selective ammonia conversion to nitrogen, where ammonia conversion occurs over a wide range of temperatures in a vehicle's driving cycle, and minimal nitrogen oxide and nitrous oxide byproducts are formed.

### Summary of the Invention

According to some embodiments of the present invention, a catalytic article may comprise a substrate having an inlet and an outlet; a first coating comprising platinum on a support; and a second coating comprising a SCR catalyst; wherein the SCR catalyst comprises a Cu-loaded molecular sieve and Ce.

In a further embodiment, the invention relates to an exhaust system comprising the catalytic article as herein described, and a means for introducing a reductant upstream of the catalytic article.

In a yet further embodiment, the invention relates to a method of reducing NOx remake and/or reducing N₂O make in an exhaust gas system, said method comprising providing the catalytic article as herein described or the exhaust system as herein described.

Each aspect or embodiment as defined herein may be combined with any other aspect(s) or embodiment(s) unless clearly indicated to the contrary. In particular, any features indicated as being preferred or advantageous may be combined with any other feature indicated as being preferred or advantageous.

### Brief Description of the Drawings

**Figure 1** depicts NH₃ conversion of catalyst 1 and catalyst 2
**Figure 2** depicts NOₓ make of catalyst 1 and catalyst 2
**Figure 3** depicts NOₓ conversion and N₂O make of catalyst 1 and catalyst 2
**Figure 4** depicts NH₃ conversion of catalyst 3 and catalyst 4
**Figure 5** depicts NOₓ make of catalyst 3 and catalyst 4
**Figure 6** depicts NOₓ conversion and N₂O make of catalyst 3 and catalyst 4
**Figure 7** depicts NH₃ conversion for catalyst 5 and catalyst 6
**Figure 8** depicts NOₓ make of catalyst 5 and catalyst 6
**Figure 9** depicts N₂O make for catalyst 5 and catalyst 6
**Figure 10** depicts NOₓ conversion and N₂O make of catalyst 5 and catalyst 6
**Figure 11** depicts NH₃ conversion of catalyst 7 and catalyst 8
**Figure 12** depicts NOₓ make of catalyst 7 and catalyst 8
**Figure 13** depicts N₂O make of catalyst 7 and catalyst 8
**Figure 14** depicts NOₓ conversion and N₂O make of catalyst 7 and catalyst 8
**Figure 15** depicts NH₃ conversion of catalyst 5, catalyst 6, catalyst 7, and catalyst 8
**Figure 16** depicts NOₓ make of catalyst 5, catalyst 6, catalyst 7, and catalyst 8
**Figure 17** depicts N₂O make of catalyst 5, catalyst 6, catalyst 7, and catalyst 8
**Figure 18** depicts steady-state NH₃ conversion, NOₓ make and N₂O make of catalyst 5, catalyst 6, catalyst 7, and catalyst 8
**Figure 19** depicts NH₃ conversion of catalyst 9, catalyst 10, and catalyst 11
**Figure 20** depicts NOₓ make of catalyst 9, catalyst 10, and catalyst 11
**Figure 21** depicts N₂O make of catalyst 9, catalyst 10, and catalyst 11
**Figure 22** depicts NOₓ conversion and N₂O make of catalyst 9, catalyst 10, and catalyst 11

### Detailed Description of the Invention

Catalysts of the present invention relate to ammonia slip catalysts with an improvement in secondary emissions with reduced NOx remake and reduced N₂O make. The present inventors have surprisingly found that catalysts of the present invention have a particular improvement in NOx remake at high temperatures, which allows such catalysts to meet the increasingly stringent requirements. Catalyst articles of embodiments of the present invention include a substrate with a first coating comprising platinum on a support; and a second coating comprising a SCR catalyst; wherein the SCR catalyst comprises a Cu-loaded molecular sieve and Ce. The catalysts and specific configurations are described in further detail below.

### Platinum on a support

Embodiments of the present invention include platinum on a support. Preferably, the support includes a metal oxide and/or a zeolite, with metal oxides being particularly preferred.

The platinum can be blended with one or more supports, mixed with one or more supports or supported on one or more supports. In a preferred embodiment, the platinum is supported on one or more supports.

The type of support is not particularly limited provided that is inert and is suitable for use in an after-treatment system. In some embodiments, the support may include a metal oxide selected from alumina, ceria, zirconia, silica, titania, and/or Me-doped alumina or titania (where Me could be a catalytically active transition metal), and physical mixtures or composites thereof, with alumina and also ceria being particularly preferred.

In a preferred embodiment, the support is alumina.

In certain embodiments, the supports have wide pores (e.g., 100-350 Å) or both wide and narrow pores. In certain embodiments, the support has a BET surface area of at least 50 m²/g, preferably about 50-500 m²/g, more preferably about 50-300 m²/g, or about 150-250 m²/g. Refractory metal oxide supports preferably have a pore volume of about 0.1-0.5 g/cc, for example about 0.2-0.4 g/cc, preferably measured by mercury intrusion porosimetry. The mean particle size, based on the particle count, of the support material is preferably about 0.01-10 µm, for example about 0.5-5 µm, about 0.1-1 µm, or about 5-10 µm, and preferably has a majority of the particle count within one of these ranges. In certain embodiments, the D₉₀ particle size of the support is within one of these ranges.

In some embodiments, the Pt on a support may comprise Pt supported on a molecular sieve such as a zeolite.

In some embodiments, the first coating may comprise, consist essentially of, or consist of, a blend of: 1) Pt on a support, and 2) a molecular sieve. In some embodiments, the molecular sieve comprises a zeolite. In some embodiments, the molecular sieve is in the H-form, ammonium-form, or metal-substituted form (e.g., Cu- substituted or Fe-substituted). In a preferred embodiment, the molecular sieve is in the H-form. In a particularly preferred embodiment, the first coating comprises, consists essentially of or consists of a blend of 1) Pt on a support, and 2) a H-form molecular sieve.

In some embodiments, the first coating may include a molecular sieve in an amount of up to about 2g/in³; about 0.1g/in³ to about 2 g/in³; about 0.1g/in³ to about 1g/in³; about 0.1g/in³ to about 0.5g/in³; about 0.2g/in³ to about 0.5g/in³; about 0.1g/in³; about 0.2g/in³; about 0.3g/in³; about 0.4g/in³; about 0.5g/in³; about 1g/in³; about 1.5g/in³; or about 2g/in³.

In general, a molecular sieve included in the first coating may comprise a molecular sieve having an aluminosilicate framework (e.g. zeolite), an aluminophosphate framework (e.g. AlPO), a silicoaluminophosphate framework (e.g. SAPO), a heteroatom-containing aluminosilicate framework, a heteroatom-containing aluminophosphate framework (e.g. MeAlPO, where Me is a metal), or a heteroatom-containing silicoaluminophosphate framework (e.g. MeSAPO, where Me is a metal). The heteroatom (i.e. in a heteroatom-containing framework) may be selected from the group consisting of boron (B), gallium (Ga), titanium (Ti), zirconium (Zr), zinc (Zn), iron (Fe), vanadium (V) copper (Cu) and combinations of any two or more thereof. It is preferred that the heteroatom is a metal (e.g. each of the above heteroatom-containing frameworks may be a metal-containing framework).

The description of molecular sieves herein describes molecular sieves that may be suitable as a support for Pt and/or as a component blended with Pt on a support. In some embodiments, a molecular sieve present in the first coating comprises, or consists essentially of, a molecular sieve having an aluminosilicate framework (e.g. zeolite) or a silicoaluminophosphate framework (e.g. SAPO).

When the molecular sieve has an aluminosilicate framework (e.g. the molecular sieve is a zeolite), then typically the molecular sieve has a silica to alumina molar ratio (SAR) of from 5 to 200 (e.g. 10 to 200), 10 to 100 (e.g. 10 to 30 or 20 to 80), such as 12 to 40, or 15 to 30.

In some embodiments, a suitable molecular sieve has a SAR of from 10 to 30, e.g., from 20 to 25. In a preferred embodiment, the SAR is from 12 to 28, e.g., from 13 to 25 or from 20 to 25. In some embodiments, a suitable molecular sieve has a SAR of > 200; > 600; or > 1200. In some embodiments, the molecular sieve has a SAR of from about 1500 to about 2100.

Typically, the molecular sieve is microporous. A microporous molecular sieve has pores with a diameter of less than 2 nm (e.g. in accordance with the IUPAC definition of "microporous" [see Pure & Appl. Chem., 66(8), (1994), 1739-1758)]).

In embodiments where platinum is supported on a molecular sieve, a suitable molecular sieve may have an external surface area of at least about 30 m²/g; at least about 40 m²/g; at least about 50 m²/g; at least about 60 m²/g; at least about 70 m²/g; at least about 80 m²/g; at least about 90 m²/g; or at least about 100 m²/g.

In some embodiments, a suitable molecular sieve may have an average crystal size of about 2 pm or less; about 1.5 pm or less; about 1 pm or less; about 0.5 pm or less; about 0.3 pm or less; less than about 2 pm; less than about 1.5 pm; less than about 1 pm; less than about 0.5 pm; less than about 0.3 pm; about 0.1 pm to about 2 pm; about 0.3 pm to about 1.5 pm; or about 0.5 pm to about 1 pm. Notably, particle size may be significantly different than a molecular sieve crystal size, as a particle may consist of aggregates of many smaller crystals.

A molecular sieve included in the first coating may comprise a small pore molecular sieve (e.g. a molecular sieve having a maximum ring size of eight tetrahedral atoms), a medium pore molecular sieve (e.g. a molecular sieve having a maximum ring size of ten tetrahedral atoms) or a large pore molecular sieve (e.g. a molecular sieve having a maximum ring size of twelve tetrahedral atoms) or a combination of two or more thereof.

When the molecular sieve is a small pore molecular sieve, then the small pore molecular sieve may have a framework structure represented by a Framework Type Code (FTC) selected from the group consisting of ACO, AEI, AEN, AFN, AFT, AFX, ANA, APC, APD, ATT, CDO, CHA, DDR, DFT, EAB, EDI, EPI, ERI, GIS, GOO, IHW, ITE, ITW, LEV, LTA, KFI, MER, MON, NSI, OWE, PAU, PHI, RHO, RTH, SAT, SAV, SFW, SIV, THO, TSC, UEI, UFI, VNI, YUG and ZON, or a mixture and/or an intergrowth of two or more thereof. Preferably, the small pore molecular sieve has a framework structure represented by a FTC selected from the group consisting of CHA, LEV, AEI, AFX, ERI, LTA, SFW, KFI, DDR and ITE. More preferably, the small pore molecular sieve has a framework structure represented by a FTC selected from the group consisting of CHA and AEI. The small pore molecular sieve may have a framework structure represented by the FTC CHA. The small pore molecular sieve may have a framework structure represented by the FTC AEI. When the small pore molecular sieve is a zeolite and has a framework represented by the FTC CHA, then the zeolite may be chabazite.

When the molecular sieve is a medium pore molecular sieve, then the medium pore molecular sieve may have a framework structure represented by a Framework Type Code (FTC) selected from the group consisting of AEL, AFO, AHT, BOF, BOZ, CGF, CGS, CHI, DAC, EUO, FER, HEU, IMF, ITH, ITR, JRY, JSR, JST, LAU, LOV, MEL, MFI, MFS, MRE, MTT, MVY, MWW, NAB, NAT, NES, OBW, -PAR, PCR, PON, PUN, RRO, RSN, SFF, SFG, STF, STI, STT, STW, -SVR, SZR, TER, TON, TUN, UOS, VSV, WEI and WEN, or a mixture and/or an intergrowth of two or more thereof. Preferably, the medium pore molecular sieve has a framework structure represented by a FTC selected from the group consisting of FER, MEL, MFI, and STT. More preferably, the medium pore molecular sieve has a framework structure represented by a FTC selected from the group consisting of FER and MFI, particularly MFI. When the medium pore molecular sieve is a zeolite and has a framework represented by the FTC FER or MFI, then the zeolite may be ferrierite, silicalite or ZSM-5.

When the molecular sieve is a large pore molecular sieve, then the large pore molecular sieve may have a framework structure represented by a Framework Type Code (FTC) selected from the group consisting of AFI, AFR, AFS, AFY, ASV, ATO, ATS, BEA, BEC, BOG, BPH, BSV, CAN, CON, CZP, DFO, EMT, EON, EZT, FAU, GME, GON, IFR, ISV, ITG, IWR, IWS, IWV, IWW, JSR, LTF, LTL, MAZ, MEI, MOR, MOZ, MSE, MTW, NPO, OFF, OKO, OSI, -RON, RWY, SAF, SAO, SBE, SBS, SBT, SEW, SFE, SFO, SFS, SFV, SOF, SOS, STO, SSF, SSY, USI, UWY, and VET, or a mixture and/or an intergrowth of two or more thereof. Preferably, the large pore molecular sieve has a framework structure represented by a FTC selected from the group consisting of AFI, BEA, MAZ, MOR, and OFF. More preferably, the large pore molecular sieve has a framework structure represented by a FTC selected from the group consisting of BEA, MOR and MFI. When the large pore molecular sieve is a zeolite and has a framework represented by the FTC BEA, FAU or MOR, then the zeolite may be a beta zeolite, faujasite, zeolite Y, zeolite X or mordenite.

In some embodiments, a suitable molecular sieve includes, for example, CHA, LEV, AEI, AFX, MOR, ERI, SFW, KFI, DDR, ITE, BEA, MFI and FER, and mixtures and intergrowths thereof. In a preferred embodiment, a suitable molecular sieve includes FER, BEA, CHA, AEI, MOR, MFI, and mixtures and intergrowths thereof, more preferably wherein the molecular sieve is selected from CHA, AEI, BEA or FER.

In one preferred embodiment, the first coating comprises platinum and alumina.

In a further embodiment, the first coating comprises platinum, alumina and FER zeolite.

In a further embodiment, the first coating comprises platinum, alumina and BEA zeolite.

The Pt component can be supported on the support. The Pt component can be incorporated onto the support by any conventional means, such as mixing an aqueous salt solution containing the metal with the support to form a metal colloid washcoat which can then be applied to the substrate. In certain embodiments, the Pt is prefixed on the support via impregnation prior to washcoat batching. Preferably, the Pt is a coating on the support.

In some embodiments, the platinum is present on the support in an amount of about 0.1 wt% to about 10 wt% of the total weight of the platinum and the support; about 0.5 wt% to about 6 wt% of the total weight of the platinum and the support; about 1wt% to about 4 wt% of the total weight of the platinum and the support; about 10 wt% of the total weight of the platinum and the support; about 0.5 wt% of the total weight of the platinum and the support; about 1 wt% of the total weight of the platinum and the support; about 2 wt% of the total weight of the platinum and the support; about 3 wt% of the total weight of the platinum and the support; about 4 wt% of the total weight of the platinum and the support; about 5 wt% of the total weight of the platinum and the support; about 6 wt% of the total weight of the platinum and the support; about 7 wt% of the total weight of the platinum and the support; about 8 wt% of the total weight of the platinum and the support; about 9 wt% of the total weight of the platinum and the support; or about 10 wt% of the total weight of the platinum and the support. In some embodiments, Pt is present on the support in an amount of about 0.1 wt% to about 10 wt% of the total weight of the Pt and the support; about 0.1 wt% to about 6 wt% of the total weight of the Pt and the support; about 0.1 wt% to about 5 wt% of the total weight of the Pt and the support; or about 0.1 wt% to about 4 wt% of the total weight of the Pt and the support.

### SCR catalyst

The SCR catalyst of the invention comprises a Cu-loaded molecular sieve and Ce.

The Cu is loaded onto the molecular sieve. Ce can be blended with the molecular sieve, mixed with the molecular sieve or supported on the molecular sieve. In one embodiment, the molecular sieve is exchanged with Cu. In one embodiment, the molecular sieve is exchanged with Ce. In one embodiment, the molecular sieve is exchanged with both Cu and Ce. In a preferred embodiment, at least one of Cu and Ce are exchanged with the molecular sieve, preferably at least Cu is exchanged with the molecular sieve.

The molecular sieve based SCR catalyst may comprise a molecular sieve having an aluminosilicate framework (e.g. zeolite), an aluminophosphate framework (e.g. AIPO), a silicoaluminophosphate framework (e.g. SAPO), a heteroatom-containing aluminosilicate framework, a heteroatom-containing aluminophosphate framework (e.g. MeAlPO, where Me is a metal), or a heteroatom-containing silicoaluminophosphate framework (e.g. MeAPSO, where Me is a metal). The heteroatom (i.e. in a heteroatom-containing framework) may be selected from the group consisting of boron (B), gallium (Ga), titanium (Ti), zirconium (Zr), zinc (Zn), iron (Fe), vanadium (V) and combinations of any two or more thereof. It is preferred that the heteroatom is a metal (e.g. each of the above heteroatom-containing frameworks may be a metal-containing framework).

The molecular sieve based SCR catalyst may comprise, or consist essentially of, a molecular sieve having an aluminosilicate framework (e.g. zeolite) or a silicoaluminophosphate framework (e.g. SAPO).

When the molecular sieve has an aluminosilicate framework (e.g. the molecular sieve is a zeolite), then typically the molecular sieve has a silica to alumina molar ratio (SAR) of from 5 to 200 (e.g. 10 to 200), preferably 10 to 100 (e.g. 10 to 30 or 20 to 80), such as 12 to 40, more preferably 15 to 30. In a preferred embodiment, the SAR is at least about 5, preferably at least about 20, with useful ranges of from about 10 to 200. In a particularly preferred embodiment, the SAR is from 5 to 35, e.g. from 10 to 30. In one embodiment, the SAR is from 12 to 18. In another embodiment, the SAR is from 18 to 22. In another embodiment, the SAR is from 22 to 28. In a particularly preferred embodiment, the SAR is from 10 to 30, from 12 to 28, from 13 to 26 or from 20 to 25.

In one embodiment, the loading of the molecular sieve in the SCR catalyst is between 1 and 4 g/in³, preferably from 1 to 3 g/in³, or even more preferably between 1.5 to 2.5 g/in³. In some embodiments, the loading of the molecular sieve in the SCR catalyst is about 1 g/in³, about 2 g/in³, or about 3 g/in³.

Typically, the molecular sieve is microporous. A microporous molecular sieve has pores with a diameter of less than 2 nm (e.g. in accordance with the IUPAC definition of "microporous" [see Pure & Appl. Chem., 66(8), (1994), 1739-1758)]).

The molecular sieve based SCR catalyst may comprise a small pore molecular sieve (e.g. a molecular sieve having a maximum ring size of eight tetrahedral atoms), a medium pore molecular sieve (e.g. a molecular sieve having a maximum ring size of ten tetrahedral atoms) or a large pore molecular sieve (e.g. a molecular sieve having a maximum ring size of twelve tetrahedral atoms) or a combination of two or more thereof.

When the molecular sieve is a small pore molecular sieve, then the small pore molecular sieve may have a framework structure represented by a Framework Type Code (FTC) selected from the group consisting of ACO, AEI, AEN, AFN, AFT, AFX, ANA, APC, APD, ATT, CDO, CHA, DDR, DFT, EAB, EDI, EPI, ERI, GIS, GOO, IHW, ITE, ITW, LEV, LTA, KFI, MER, MON, NSI, OWE, PAU, PHI, RHO, RTH, SAT, SAV, SFW, SIV, THO, TSC, UEI, UFI, VNI, YUG and ZON, or a mixture and/or an intergrowth of two or more thereof. Preferably, the small pore molecular sieve has a framework structure represented by a FTC selected from the group consisting of CHA, LEV, AEI, AFX, ERI, LTA, SFW, KFI, DDR and ITE. More preferably, the small pore molecular sieve has a framework structure represented by a FTC selected from the group consisting of CHA and AEI. The small pore molecular sieve may have a framework structure represented by the FTC CHA. The small pore molecular sieve may have a framework structure represented by the FTC AEI. When the small pore molecular sieve is a zeolite and has a framework represented by the FTC CHA, then the zeolite may be chabazite.

When the molecular sieve is a medium pore molecular sieve, then the medium pore molecular sieve may have a framework structure represented by a Framework Type Code (FTC) selected from the group consisting of AEL, AFO, AHT, BOF, BOZ, CGF, CGS, CHI, DAC, EUO, FER, HEU, IMF, ITH, ITR, JRY, JSR, JST, LAU, LOV, MEL, MFI, MFS, MRE, MTT, MVY, MWW, NAB, NAT, NES, OBW, -PAR, PCR, PON, PUN, RRO, RSN, SFF, SFG, STF, STI, STT, STW, -SVR, SZR, TER, TON, TUN, UOS, VSV, WEI and WEN, or a mixture and/or an intergrowth of two or more thereof. Preferably, the medium pore molecular sieve has a framework structure represented by a FTC selected from the group consisting of FER, MEL, MFI, and STT. More preferably, the medium pore molecular sieve has a framework structure represented by a FTC selected from the group consisting of FER and MFI, particularly MFI. When the medium pore molecular sieve is a zeolite and has a framework represented by the FTC FER or MFI, then the zeolite may be ferrierite, silicalite or ZSM-5.

When the molecular sieve is a large pore molecular sieve, then the large pore molecular sieve may have a framework structure represented by a Framework Type Code (FTC) selected from the group consisting of AFI, AFR, AFS, AFY, ASV, ATO, ATS, BEA, BEC, BOG, BPH, BSV, CAN, CON, CZP, DFO, EMT, EON, EZT, FAU, GME, GON, IFR, ISV, ITG, IWR, IWS, IWV, IWW, JSR, LTF, LTL, MAZ, MEI, MOR, MOZ, MSE, MTW, NPO, OFF, OKO, OSI, -RON, RWY, SAF, SAO, SBE, SBS, SBT, SEW, SFE, SFO, SFS, SFV, SOF, SOS, STO, SSF, SSY, USI, UWY, and VET, or a mixture and/or an intergrowth of two or more thereof. Preferably, the large pore molecular sieve has a framework structure represented by a FTC selected from the group consisting of AFI, BEA, MAZ, MOR, and OFF. More preferably, the large pore molecular sieve has a framework structure represented by a FTC selected from the group consisting of BEA, MOR and MFI. When the large pore molecular sieve is a zeolite and has a framework represented by the FTC BEA, FAU or MOR, then the zeolite may be a beta zeolite, faujasite, zeolite Y, zeolite X or mordenite.

In some embodiments, a suitable molecular sieve includes, for example, CHA, LEV, AEI, AFX, MOR, ERI, SFW, KFI, DDR, ITE, BEA, MFI and FER, and mixtures and intergrowths thereof. In a preferred embodiment, a suitable molecular sieve includes FER, BEA, CHA, AEI, MOR, MFI, and mixtures and intergrowths thereof, more preferably wherein the molecular sieve is selected from CHA, AEI, BEA or FER, even more preferably wherein the molecular sieve is selected from CHA and AEI, most preferably wherein the molecular sieve is CHA.

The SCR catalyst comprises a Cu- loaded molecular sieve and Ce. In some embodiments, the SCR catalyst can comprise one or more further transition metal(s). The further transition metal(s) may be selected from the group consisting of cobalt, iron, titanium, manganese, nickel, palladium, platinum, ruthenium and rhenium. In one embodiment, the SCR catalyst comprises a Cu-loaded molecular sieve, Ce and Mn. In a further embodiment, the SCR catalyst comprises a Cu-loaded molecular sieve, Ce and Ti.

In some embodiments, the molecular sieve is free of, or essentially free of any additional transition metals. For example, in some aspects, the molecular sieve contains additional transition metals (i.e., further to the Cu and Ce) in an amount less than about 1 wt%; less than about 0.7 wt%; less than about 0.5 wt%; less than about 0.3 wt%; less than about 0.1 wt%; less than about 0.07 wt%; less than about 0.05 wt%; or less than about 0.01 wt%, based on the weight of the molecular sieve. In some aspects, the molecular sieve may be described as bimetallic, as the molecular sieve includes two transition metals.

The transition metal may be present on an extra-framework site on the external surface of the molecular sieve or within a channel, cavity or cage of the molecular sieve.

In some embodiments, the molecular sieve comprises Cu and Ce in a combined amount of about 1 to about 10% by weight based on the total weight of the Cu-loaded molecular sieve and Ce, preferably from 1.5 to 9.5wt%, from 2 to 9 wt% or from 3 to 8 wt%. In a particularly preferred embodiment, the molecular sieve comprises Cu and Ce in a combined amount of from 3 to 7 wt%, even more preferably from 3.5 to 6.5 wt% and even more preferably from 4 to 6 wt%, based on the total weight of the Cu-loaded molecular sieve and Ce. In some embodiments, the molecular sieve comprises Cu and Ce in a combined amount of about 0.10 to about 10 % based on the total weight of the Cu-loaded molecular sieve and Ce; about 0.5 to about 7% by weight; about 1 to about 6.5% by weight ; about 2 to about 6% by weight; about 3 to about 6% by weight; about 3.5 to about 7% by weight; about 3to about 6.5% by weight; about 4 to about 6% by weight; about 4.5 to about 5.5% by weight; about 3 to 5% by weight; or about 2 to about 4% by weight based on the total weight of the Cu-loaded molecular sieve and Ce.

In some embodiments, the molecular sieve comprises Cu in an amount of about 0.05 to about 7 % by weight based on the total weight of the Cu-loaded molecular sieve and Ce, preferably from about 0.5 to about 6 wt%, or from about 2 to about 5 wt%, even more preferably from about 2.5 to 4.5 wt%. In some embodiments, the molecular sieve comprises Cu in an amount of about 0.05 to about 7% based on the total weight of the Cu-loaded molecular sieve and Ce; about 0.5 to about 5% by weight; about 0.05 to about 5% by weight; about 0.1 to about 4% by weight; about 0.1 to about 3% by weight; about 0.2 to about 3% by weight; about 0.5 to about 2.5% by weight; about 1 to about 4% by weight; or about 1 to about 2% by weight based on the total weight of the Cu-loaded molecular sieve and Ce.

In some embodiments, the molecular sieve comprises a Cu:Al molar ratio higher than the traditional molar ratios of 0.35 to 0.4. In some embodiments, the Cu:Al molar ratio is from about 0.40 to about 0.65; about 0.41 to about 0.65; about 0.42 to about 0.65; about 0.43 to about 0.65; about 0.44 to about 0.65; about 0.45 to about 0.64; about 0.45 to about 0.63; about 0.45 to about 0.62; about 0.45 to about 0.62; about 0.46 to about 0.61; about 0.47 to about 0.60; about 0.48 to about 0.59; about 0.45 to about 0.59; about 0.46 to about 0.59; about 0.45; about 0.46; about 0.47; about 0.48; about 0.49; about 0.50; about 0.51; about 0.52; about 0.53; about 0.54; about 0.55; about 0.56; about 0.57; about 0.58; about 0.59; about 0.60; about 0.61; about 0.62; about 0.63; about 0.64; about 0.65; greater than about 0.40, greater than about 0.41; greater than about 0.42; greater than about 0.43; greater than about 0.44; greater than about 0.45; greater than about 0.46; greater than about 0.47; or greater than about 0.50. Using these higher Cu:Al ratios in combination with the ceria in the SCR catalyst can provide an improvement in secondary emissions with reduced NOx remake and reduced N₂O make, particularly at high temperatures.

In some embodiments, the molecular sieve comprises Ce in an amount of about 0.05 to about 5 % by weight based on the total weight of the Cu-loaded molecular sieve and Ce, preferably from about 0.1 to 4 wt%, e.g. from 0.5 to 3.5 wt% or from 1 to 3 wt%. In some embodiments, the molecular sieve comprises Ce in an amount of about 0.05 to about 5% based on the total weight of the Cu-loaded molecular sieve and Ce; about 0.5 to about 4.5% by weight; about 0.05 to about 4% by weight; about 0.1 to about 3.5% by weight; about 0.1 to about 3% by weight; about 0.2 to about 3% by weight; about 0.5 to about 2.5% by weight; about 1 to about 4% by weight; or about 1 to about 2% by weight based on the total weight of the Cu-loaded molecular sieve and Ce.

In some embodiments, the molecular sieve comprises an additional transition metal in an amount of about 0.05 to about 5 % by weight based on the total weight of the Cu-loaded molecular sieve, Ce and the additional transition metal, preferably from about 0.1 to 4 wt%, e.g. from 0.5 to 3 wt% or from 1 to 2 wt%, based on the total weight of the Cu-loaded molecular sieve, Ce and the additional transition metal. When present, the additional transition metal can be chosen from the group comprising (e.g. consisting essentially of or consisting of) Mn, Fe, Ti, Zr, Si, W, preferably Mn, Fe or Ti, more preferably Mn or Fe, most preferably Mn. In a preferred embodiment, the molecular sieve comprises an additional transition metal (e.g. Mn, Fe, Ti, Zr, Si, W, preferably Mn or Fe) in an amount of from 0.05 to 2 wt%, preferably from 0.1 to 1.75 wt%, preferably from 0.25 to 1.5 wt% based on the total weight of the Cu-loaded molecular sieve, Ce and the additional transition metal. In a particularly preferred embodiment, the molecular sieve comprises Mn in an amount of from 0.25 to 1.25 wt% based on the total weight of the Cu-loaded molecular sieve, Ce and Mn.

In some embodiments, the molecular sieve comprises Cu and Ce in a weight ratio of about 0.1 to about 20 preferably from about 0.5 to about 10, e.g. from 1 to 5. In some aspects, the molecular sieve of the present invention comprises Cu and Ce in a weight ratio of about 1:1. In some aspects, the molecular sieve of the present invention comprises Cu and Ce in a weight ratio of about 0.1 to about 20; about 0.2 to about 15; or about 0.33 to about 4. In some aspects, in addition to utilizing the above-mentioned Cu and Ce ratios, the exchange capacity of the molecular sieve in terms of metal ion to exchange site ratio should be <1; <0.75; or <0.5. In some aspects, the molecular sieve has a transition metal to aluminium ratio of <1; <0.75; or <0.5.

In some embodiments, the selective catalytic reduction catalyst comprises the selective catalytic reduction composition in a total loading of 0.5 to 4.5 g in⁻³, preferably 1.0 to 3.0 g in⁻³.

Catalysts of the present invention can be prepared by any suitable means known in the art, including, for example, one pot, prefixing, and spray drying.

The SCR catalyst composition may comprise a mixture of (a) a metal oxide based SCR catalyst formulation and (b) a molecular sieve based SCR catalyst formulation. The (a) metal oxide based SCR catalyst formulation may comprise, or consist essentially of, an oxide of vanadium (e.g. V₂O₅) and optionally an oxide of tungsten (e.g. WO₃), supported on titania (e.g. TiO₂) and (b) the molecular sieve based SCR catalyst formulation may comprise the Cu-loaded molecular sieve and Ce as herein described.

### Substrate

Catalysts of the present invention may each further comprise a flow-through substrate or filter substrate. In one embodiment, the catalyst may be coated onto the flow-through or filter substrate, and preferably deposited on the flow-through or filter substrate using a washcoat procedure.

The combination of an SCR catalyst and a filter is known as a selective catalytic reduction filter (SCRF catalyst). An SCRF catalyst is a single-substrate device that combines the functionality of an SCR and particulate filter, and is suitable for embodiments of the present invention as desired. Description of and references to the SCR catalyst throughout this application are understood to include the SCRF catalyst as well, where applicable. In general for an SCRF, the selective catalytic reduction composition is disposed within the wall of the wall-flow filter substrate monolith. Additionally, the selective catalytic reduction composition may be disposed on the walls of the inlet channels and/or on the walls of the outlet channels.

The flow-through or filter substrate is a substrate that is capable of containing catalyst/adsorber components. The substrate is preferably a ceramic substrate or a metallic substrate. The ceramic substrate may be made of any suitable refractory material, e.g., alumina, silica, titania, ceria, zirconia, magnesia, zeolites, silicon nitride, silicon carbide, zirconium silicates, magnesium silicates, aluminosilicates, metallo aluminosilicates (such as cordierite and spudomene), or a mixture or mixed oxide of any two or more thereof. Cordierite, a magnesium aluminosilicate, and silicon carbide are particularly preferred.

The metallic substrates may be made of any suitable metal, and in particular heat-resistant metals and metal alloys such as titanium and stainless steel as well as ferritic alloys containing iron, nickel, chromium, and/or aluminium in addition to other trace metals. The flow-through substrate is preferably a flow-through monolith having a honeycomb structure with many small, parallel thin-walled channels running axially through the substrate and extending throughout from an inlet or an outlet of the substrate. The channel cross-section of the substrate may be any shape, but is preferably square, sinusoidal, triangular, rectangular, hexagonal, trapezoidal, circular, or oval. The flow-through substrate may also be high porosity which allows the catalyst to penetrate into the substrate walls.

The filter substrate is preferably a wall-flow monolith filter. The channels of a wall-flow filter are alternately blocked, which allow the exhaust gas stream to enter a channel from the inlet, then flow through the channel walls, and exit the filter from a different channel leading to the outlet. Particulates in the exhaust gas stream are thus trapped in the filter.

The catalyst/adsorber may be **added** to the flow-through or filter substrate by any known means, such as a washcoat procedure.

### Configurations

In a first configuration, a catalytic article (e.g. a catalytic article as herein described) can comprise a first coating comprising platinum on a support and a second coating comprising a SCR catalyst, wherein the SCR catalyst comprises a Cu-loaded molecular sieve and Ce, and wherein:
the second coating is located in a layer over the first coating and the second coating covers all of the first coating.

In a second configuration, a catalytic article (e.g. a catalytic article as herein described) can comprise a first coating comprising platinum on a support and a second coating comprising a SCR catalyst, wherein the SCR catalyst comprises a Cu-loaded molecular sieve and Ce, and wherein:
the first coating extends from the outlet end toward the inlet end, covering less than a full length of the substrate, and the second coating extends the entire length of the substrate,
completely overlapping the first coating.

In a third configuration, a catalytic article (e.g. a catalytic article as herein described) can comprise a first coating comprising platinum on a support and a second coating comprising a SCR catalyst, wherein the SCR catalyst comprises a Cu-loaded molecular sieve and Ce, and wherein:
the first coating extends from the outlet end toward the inlet end, covering less than a full length of the substrate, and the second coating extends from the inlet end towards the outlet end, partially overlapping the first coating. The second coating can overlap the first coating by an amount from about 10% to about 95%, inclusive, preferably about 50% to 95%, inclusive.

In a fourth configuration, a catalytic article (e.g. a catalytic article as herein described) can comprise a first coating comprising platinum on a support and a second coating comprising a SCR catalyst, wherein the SCR catalyst comprises a Cu-loaded molecular sieve and Ce, and wherein:
the first coating extends from the outlet end toward the inlet end, covering less than a full length of the substrate, and the second coating extends from the inlet end towards the outlet end, without overlapping the first coating. There may be a space between the first coating and the second coating, the first coating and the second coating may meet but not overlap, or there may be a slight and insubstantial overlap of the first and second coating.

In a fifth configuration, a catalytic article (e.g. a catalytic article as herein described) can comprise a first coating comprising platinum on a support and a second coating comprising a SCR catalyst, wherein the SCR catalyst comprises a Cu-loaded molecular sieve and Ce, and wherein:
the first coating extends from the outlet end toward the inlet end, covering the full length of the substrate, and the second coating extends the entire length of the substrate, completely overlapping the first coating.

In a sixth configuration, a catalytic article (e.g. a catalytic article as herein described) can comprise a first coating comprising platinum on a support and a second coating comprising a SCR catalyst, wherein the SCR catalyst comprises a Cu-loaded molecular sieve and Ce, and wherein:
the first and second coating are blended and applied to the substrate as a single layer. In some embodiments, the blend of the first and second coating is applied directly to the substrate.

In a seventh configuration, the first coating of any of the configurations described herein (e.g. configurations 1 to 6) additionally has a Cu-loaded molecular sieve present.

In a further configuration, any of the configurations described herein (e.g. configurations 1 to 6) can be zoned with an additional SCR or DOC catalyst. For example, an SCR or DOC catalyst could be present on the front and/or rear of the substrate. The additional SCR or DOC catalysts can be any SCR or DOC catalyst known in the art, for example an SCR catalyst described in U.S. Pat. Nos. 4,010,238 and 4,085,193.

### Method

In an embodiment, the present invention relates to a method of producing a catalytic article (e.g., a catalytic article as described herein).

In one embodiment, the method of producing the catalytic article (e.g., a catalytic article as herein described) comprises:
a. providing a substrate (e.g., a substrate as herein defined),
b. applying first coating (e.g., a first coating as herein described), drying and optionally calcining said first coating,
c. applying a second coating (e.g., a second coating as herein described), drying and optionally calcining said second coating.

The first coating and/or second coating can be applied as a washcoat.

In one embodiment, a washcoat comprising Pt and a support (e.g. the first coating as herein described) can be applied to the inlet and/or outlet side of the substrate using a method known in the art. After application of the washcoat, the composition can be dried and optionally calcined.

For example, a washcoat layer of a composition containing Pt and a support (e.g., the first coating as herein described) may be formed by preparing a mixture or a solution of a Pt precursor in a suitable solvent (e.g. water).

Typically, a platinum precursor is utilized in the form of a compound or complex to achieve dispersion of the platinum precursor on the support. For purposes of the present invention, the term "platinum precursor" means any compound, complex, or the like which, upon calcination or initial phase of use thereof, decomposes or otherwise converts to a catalytically active form. Suitable platinum complexes or compounds include, but are not limited to platinum chlorides (e.g. salts of [PtCl_{4]}²⁻, [PtCl₆]²⁻), platinum hydroxides (e.g. salts of [Pt(OH)₆ ]²⁻), platinum amines (e.g. salts of [Pt(NH₃)₄]²⁺ ,[Pt(NH₃)₄]⁴⁺ ), platinum hydrates (e.g. salts of [Pt(OH₂)₄]²⁺), platinum bis(acetylacetonates), and mixed compounds or complexes (e.g. [Pt(NH₃)₂(Cl)₂]). A representative commercially-available platinum source is 99% ammonium hexachloroplatinate from Strem Chemicals, Inc., which may contain traces of other platinum group metals. However, it will be understood that this invention is not restricted to platinum precursors of a particular type, composition, or purity.

A mixture or solution of a platinum precursor can be added to the support by one of several chemical means. These include impregnation of a solution of the platinum precursor onto the support, which may be followed by a fixation step incorporating acidic component (e.g. acetic acid) or a basic component (e.g. ammonium hydroxide). This wet solid can be chemically reduced or calcined or be used as is. Alternatively, the support may be suspended in a suitable vehicle (e.g. water) and reacted with the platinum precursor in solution. Additional processing steps may include fixation by an acidic component (e.g. acetic acid) or a basic component (e.g. ammonium hydroxide), chemical reduction, or calcination.

In a further embodiment, a washcoat comprising a SCR catalyst (e.g., the second coating as herein described) can be applied to the inlet and/or outlet side of the substrate using a method known in the art. After application of the washcoat, the composition can be dried and optionally calcined.

For example, a washcoat layer of a composition containing a SCR catalyst (e.g., the second coating as herein described) may be formed by preparing a mixture or a solution of a molecular sieve on which has been distributed Cu and Ce. Exemplary molecular sieves, include, but are not limited to zeolites having one of the following crystal structures CHA, LEV, AEI, AFX, ERI, SFW, KFI, DDR and ITE. In a particularly preferred embodiment, the molecular sieve is selected from CHA or AEI.

A suitable method for distributing the metal on the zeolite is to first prepare a mixture or a solution of the metal precursor in a suitable solvent, e.g. water. Generally, from the point of view of economics and environmental aspects, aqueous solutions of soluble compounds or complexes of the metal are preferred. For purposes of the present invention, the term "metal precursor" means any compound, complex, or the like which, can be dispersed on the molecular sieve support to give a catalytically-active metal component. For the exemplary Group IB metal copper, suitable complexes or compounds include, but are not limited to anhydrous and hydrated copper sulfate, copper nitrate, copper acetate, copper acetylacetonate, copper oxide, copper hydroxide, and salts of copper ammines (e.g. [Cu(NH₃)₄ ]²⁺ ). A representative commercially-available copper source is 97% copper acetate from Strem Chemicals, Inc., which may contain traces of other metals, particularly iron and nickel. However, it will be understood that this invention is not restricted to metal precursors of a particular type, composition, or purity.

The molecular sieve can be added to the solution of the metal component to form a suspension. This suspension can be allowed to react so that the copper and/or cerium component is distributed on the molecular sieve. This may result in copper and/or cerium being distributed in the pore channels as well as on the outer surface of the molecular sieve. Copper may be distributed as copper (II) ions, copper (I) ions, or as copper oxide. Cerium may be distributed as cerium (II) ions, cerium (I) ions or as cerium oxide. After the copper and/or cerium is distributed on the molecular sieve, the solids can be separated from the liquid phase of the suspension, washed, and dried. The resulting copper and/or cerium-containing molecular sieve may also be calcined to fix the copper and/or cerium.

To apply a washcoat layer according to one or more embodiments of the invention, finely divided particles of a catalyst (e.g., the first or second coatings as herein described, or a mixture thereof), are suspended in an appropriate vehicle, e.g., water, to form a slurry. Other promoters and/or stabilizers and/or surfactants may be added to the slurry as mixtures or solutions in water or a water-miscible vehicle.

In one or more embodiments, the slurry is ground to result in substantially all of the solids having particle sizes of less than about 10 microns, i.e., in the range of about 0.1-8 microns, in an average diameter. This may be accomplished in a ball mill, continuous Eiger mill, or other similar equipment.

In one or more embodiments, the suspension or slurry has a pH of about 2 to less than about 7. The pH of the slurry may be adjusted if necessary by the addition of an adequate amount of an inorganic or an organic acid to the slurry.

The solids content of the slurry may be, e.g., about 20-60 wt. %, and more particularly about 35-45 wt. %.

The substrate may then be dipped into the slurry, or the slurry otherwise may be coated on the substrate, such that there will be a desired loading of the catalyst layer deposited on the substrate. In an alternative embodiment, the slurry is coated on the substrate using vacuum coating, such that there will be a desired loading of the catalyst layer deposited on the substrate.

The coated substrate can be dried at about 100° C. and calcined by heating, e.g., at 300-650° C. for about 1 to about 3 hours. Drying and calcination are typically done in air. The coating, drying, and calcination processes may be repeated if necessary to achieve the final desired gravimetric amount of the catalyst washcoat layer on the support. In some cases, the complete removal of the liquid and other volatile components may not occur until the catalyst is placed into use and subjected to the high temperatures encountered during operation.

The washcoats described herein can be dried and calcined at a temperature within the range of 300° C. to 1200° C., preferably 400° C. to 700° C., and more preferably 450° C. to 650° C.

The calcination is preferably done under dry conditions, but it can also be performed hydrothermally, i.e., in the presence of some moisture content. Calcination can be performed for a time of between about 30 minutes and about 4 hours, preferably between about 30 minutes and about 2 hours, more preferably between about 30 minutes and about 1 hour.

The term "calcine", or "calcination", means heating the material in air or oxygen. This definition is consistent with the IUPAC definition of calcination. (IUPAC. Compendium of Chemical Terminology, 2nd ed. (the "Gold Book"). Calcination is performed to decompose a metal salt and promote the exchange of metal ions within the catalyst and also to adhere the catalyst to a substrate. The temperatures used in calcination depend upon the components in the material to be calcined and generally are between about 400° C. to about 900° C. for approximately 1 to 8 hours. In some cases, calcination can be performed up to a temperature of about 1200° C. In applications involving the processes described herein, calcinations are generally performed at temperatures from about 400° C to about 700° C for approximately 1 to 8 hours, preferably at temperatures from about 400° C to about 650° C for approximately 1 to 4 hours.

After calcining, the catalyst washcoat loading can be determined through calculation of the difference in coated and uncoated weights of the substrate. As will be apparent to those skilled in the art, the catalyst loading can be modified by altering the solids content of the coating slurry and slurry viscosity. Alternatively, repeated immersions of the substrate in the coating slurry can be conducted, followed by removal of the excess slurry as described above.

### Exhaust system

An exhaust system of embodiments of the present invention may include the catalytic article as herein described which is positioned downstream of an injector for introducing ammonia or a compound decomposable to ammonia into the exhaust gas. The catalytic article as herein described may be positioned directly downstream of the injector for injecting ammonia or a compound decomposable to ammonia (e.g. there is no intervening catalyst between the injector and the catalytic article as herein described).

In one embodiment, the invention relates to an exhaust system. An exhaust system can comprise a catalyst article as herein described and a means of introducing NH₃ into the exhaust gas or for forming NH₃ in the exhaust gas.

In an exhaust system, when two or more substrates are used, one or more substrates can be located in a single housing or casing or in different housings or casings.

An exhaust system may include an SCR catalyst upstream of the catalyst article as herein described. In some embodiments, the SCR catalyst is close-coupled with the catalyst article as herein described. In some embodiments, the SCR catalyst and the catalyst article as herein described are located on a single substrate, and the SCR catalyst is located on an inlet side of the substrate and the catalyst article as herein described is located on the outlet side of the substrate.

The exhaust system may include a means for introducing NH₃ into the exhaust system upstream of an SCR and/or SCRF catalyst article as herein described. It may be preferred that the means for introducing NH₃ into the exhaust gas is directly upstream of the SCR or SCRF catalyst (e.g. there is no intervening catalyst between the means for introducing NH₃ and the SCR or SCRF catalyst article as herein described).

The NH₃ can be added to the flowing exhaust gas by any suitable means for introducing NH₃ into the exhaust gas. Suitable means include an injector, sprayer, or feeder. Such means are well known in the art.

The NH₃ for use in the system can be ammonia per se, hydrazine, or an ammonia precursor selected from the group consisting of urea, ammonium carbonate, ammonium carbamate, ammonium hydrogen carbonate, and ammonium formate. Urea is particularly preferred.

The exhaust system may also comprise a means for controlling the introduction of NH₃ into the exhaust gas in order to reduce NOx therein. Preferred control means may include an electronic control unit, optionally an engine control unit, and may additionally comprise a NOx sensor located downstream of the NO reduction catalyst.

In one embodiment, the invention relates to an engine. An engine can comprise an exhaust system (e.g., an exhaust system as herein described) comprising a catalyst article as herein described and a means of introducing NH₃ into the exhaust gas or forming NH₃ in the exhaust gas. The engine can be a combustion engine on a vehicle, a combustion engine on a stationary source, or a combustion engine on a vessel, such as a ship. The combustion engine can be a diesel engine, an ammonia engine and/or a hydrogen engine.

In a further embodiment, the invention relates to a method of cleaning up of an exhaust gas containing ammonia, e.g., by contacting an exhaust gas comprising ammonia with the catalytic article as herein described. In a specific embodiment, the invention relates to a method of cleaning up an exhaust gas comprising ammonia by contacting an exhaust gas comprising ammonia with the catalytic article as herein described.

In a further embodiment, the invention relates to a method of reducing N₂O formation from NH₃ in an exhaust gas comprising contacting an exhaust gas comprising ammonia with the catalytic article as herein described.

In a further embodiment, the invention relates to an emissions treatment system comprising a diesel engine emitting an exhaust stream including particulate matter, NOx, and carbon monoxide, and a catalytic article as described herein.

Methods of the present invention may include contacting the exhaust stream with a catalytic article as described herein.

In yet a further embodiment of the present invention, the exhaust gas may be generated by an internal combustion engine powdered by a fuel mixture containing air; and hydrogen and/or ammonia, also known as a hydrogen internal combustion engine or an ammonia internal combustion engine.

The invention also finds application in NOₓ abatement of exhaust gases produced by internal combustion engines powdered by hydrogen and/or ammonia fuel.

A hydrogen internal combustion engine is well-known to those skilled in the art and may be considered to be a modified version of a conventional gasoline (petrol) or diesel powered internal combustion engines. The fuel of the mixture of air and fuel is a gaseous fuel comprising a majority fuel mass of hydrogen (H₂). Preferably an internal combustion engine configured to run on a majority fuel mass of hydrogen (H₂) is configured to run on a fuel comprising >70 vol% H₂, such as >90 vol% H₂, >95 vol% H₂, >99 vol% H₂, and more preferably a fuel consisting essentially of H₂. The balance of the fuel mass may consist of hydrocarbons such as methane, diesel and/or gasoline.

Although a hydrogen internal combustion engine can operate essentially free of carbon-based emissions in its exhaust gas (e.g. CO or CO₂) or unburned hydrocarbons (HCs), some trace emissions may still exist due to combustion of engine additives, such as lubricating oil. Unburned hydrogen in its exhaust gas is nevertheless a problem for hydrogen internal combustion engines, as are NOₓ which arise from the combustion of the fuel in air (which is approximately 78 vol% nitrogen) as is known in respect of conventional internal combustion engines. At the same time, exhaust gases of hydrogen internal combustion engines are typically cooler than gasoline or diesel-powered engines. This can impact on the efficiency of catalytic aftertreatment of H₂ and NOx in exhaust gas, as well as on remedial processes such as selective catalytic reduction (SCR) catalyst de-sulphation adopted in diesel exhaust systems that require relatively high temperatures and sometimes also a reducing atmosphere to desulphate. Additionally, a hydrogen internal combustion engine produces a relatively large amount of water as a by-product of combustion. Typically, a hydrogen internal combustion engine exhaust gas may comprise from about 20-30 vol% water as steam.

Similarly, ammonia (NH₃) is also considered as a fuel for direct use in a combustion system, or as an efficient hydrogen carrier. Emissions from ammonia combustion are likely to contain N₂O, NO_{X}, and unburned ammonia. In addition, the water content in the exhaust gas produced from ammonia combustion will also be significantly higher than that emitted by conventional gasoline (petrol) or diesel powered internal combustion engines.

Known SCR catalysts may be used for NOₓ abatement in the exhaust of a hydrogen and/or ammonia internal combustion engines. However, the relatively high water content of the exhaust of a hydrogen or ammonia internal combustion engine negatively impacts the activity of conventional SCR catalysts resulting in reduced catalyst activity and performance. The presence of water inhibits the NOₓ conversion rate due to water being adsorbed on the active sites of the catalyst. The adsorbed water on catalysts surface hinders adsorption of reactants and the hydroxyl (OH) groups derived from dissociative adsorption of water could lower reactivity of active sites, thereby reducing catalytic activity. Surprisingly, the inventors of the present invention have found that the catalyst article according to the present invention exhibits improved catalytic activity and therefore improved NOₓ conversion rates when treating an exhaust gas having a relatively high water content.

Accordingly, in a further aspect of the present invention, there is provided a system for treating an exhaust gas produced by a hydrogen or ammonia internal combustion engine, wherein the exhaust gas comprises NOx, and wherein the system comprises:
a hydrogen internal combustion engine or an ammonia internal combustion engine; a
a catalytic article as described herein; and
a source of reductant, wherein the reductant source is upstream of the catalyst article.

In yet a further aspect of the invention, there is provided a method for reducing N₂O formation in the catalytic treatment of an exhaust gas of a hydrogen or ammonia internal combustion engine, wherein the exhaust gas is contacted with a catalytic article described herein.

### Benefits

The inventors have found that the catalyst article as described herein exhibit improve NOx conversion (e.g. improved NOx conversion under SCR conditions) and/or lower NOx remake (e.g. lower NOx remake under ammonia only conditions), particularly at high temperatures and after ageing. It is known that conventional ASC catalysts are susceptible to high NOx remake at high temperatures, particularly after ageing. The inventors have surprisingly found that the addition of ceria can stabilise the catalyst article and maintain its activity, even after ageing. The inventors have also found that the inclusion of Ce does not adversely affect ammonia oxidation or N₂O make. Furthermore, inclusion of Ce has been shown that it can result in an improvement in N₂O.

As used in this specification and the appended claims, the singular forms "a", "an" and "the" include plural referents unless the context clearly indicates otherwise. Thus, for example, reference to "a catalyst" includes a mixture of two or more catalysts, and the like.

The term "ammonia slip", means the amount of unreacted ammonia that passes through the SCR catalyst.

When a range, or ranges, for various numerical elements are provided, the range, or ranges, can include the values, unless otherwise specified.

The term "N₂ selectivity" means the percent conversion of ammonia into nitrogen.

The terms "downstream" and "upstream" describe the orientation of a catalyst or substrate where the flow of exhaust gas is from the inlet end to the outlet end of the substrate or article.

The following examples merely illustrate the invention; the skilled person will recognize many variations that are within the spirit of the invention and scope of the claims.

### Examples

### Example 1

Two catalyst articles were prepared and tested to measure the impact of Ce on NH₃ conversion, NOₓ make, NOₓ conversion and N₂O slip.

The catalysts were prepared as in US20190176128. Briefly: a bottom layer was applied to a ceramic substrate using a washcoat coating comprising Pt/alumina. The article was dried and calcined at about 500 °C for about 1 hour. The loading of Pt on the article was 3 g/ft³. A top layer was applied to the substrate coated with the bottom layer using a second washcoat comprising Cu-CHA and optionally a cerium salt. The article was dried and calcined at about 500°C for about 1 hour. The loading of CuCHA in the top layer was 2.4 g/in³.

Catalyst 1 contained a Cu:Ce ratio of 2.39:1 relative to a Cu loading of 3.3 wt%.

Catalyst 2 contained Cu:Ce ratio of 1:0 (loading of Cu was 3.3 wt%).

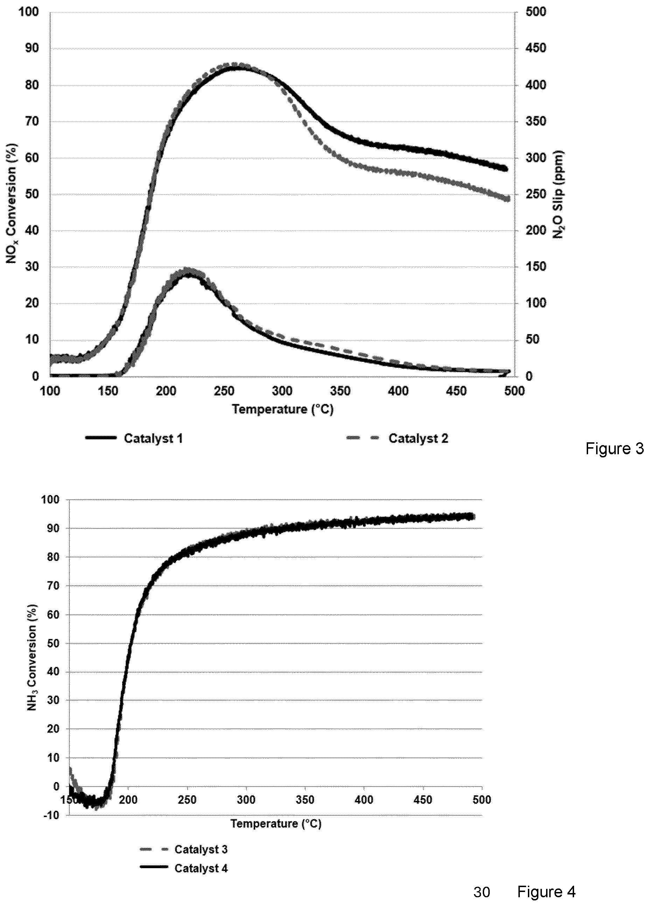

The catalyst articles were tested in 500ppm NH₃, 500ppm NO (where applicable, Figure 3), and 350ppm CO, at 180k SV. Each catalyst was tested after hydrothermal ageing at 650°C for 50 hours.

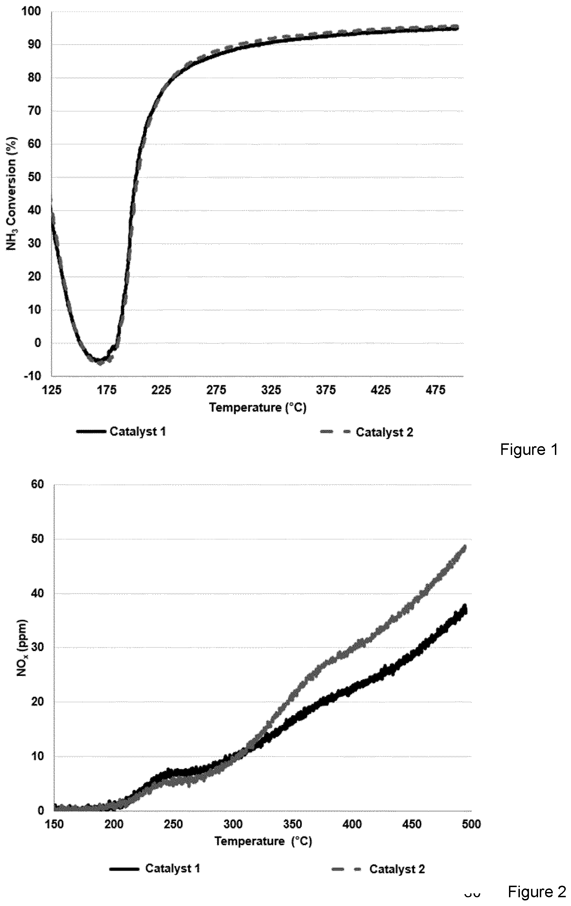

As shown in Figure 1, the addition of Ce has a minimal effect on the NH₃ oxidation function.

As shown in Figure 2, the addition of Ce decreases NOₓ remake after hydrothermal ageing.

As shown in Figure 3, the addition of Ce increases the NOₓ conversion above 300°C.

### Example 2

Two catalyst articles were prepared and tested to measure the impact of Ce on NH₃ conversion, NOₓ make, NOₓ conversion and N₂O slip.

The catalysts were prepared as in US20190176128. Briefly: a bottom layer was applied to a ceramic substrate using a washcoat coating comprising Pt/alumina. The article was dried and calcined at about 500 °C for about 1 hour. The loading of Pt on the article was 5 g/ft³. A top layer was applied to the substrate coated with the bottom layer using a second washcoat comprising Cu-CHA and optionally a cerium salt. The article was dried and calcined at about 500°C for about 1 hour. The loading of CuCHA in the top layer was 2.4 g/in³.

Catalyst 3 contained a Cu:Ce ratio of 1.10:1 relative to a Cu loading of 3.0 wt%.

Catalyst 4 contained Cu:Ce ratio of 1:0 (Cu loading was 3.0 wt%).

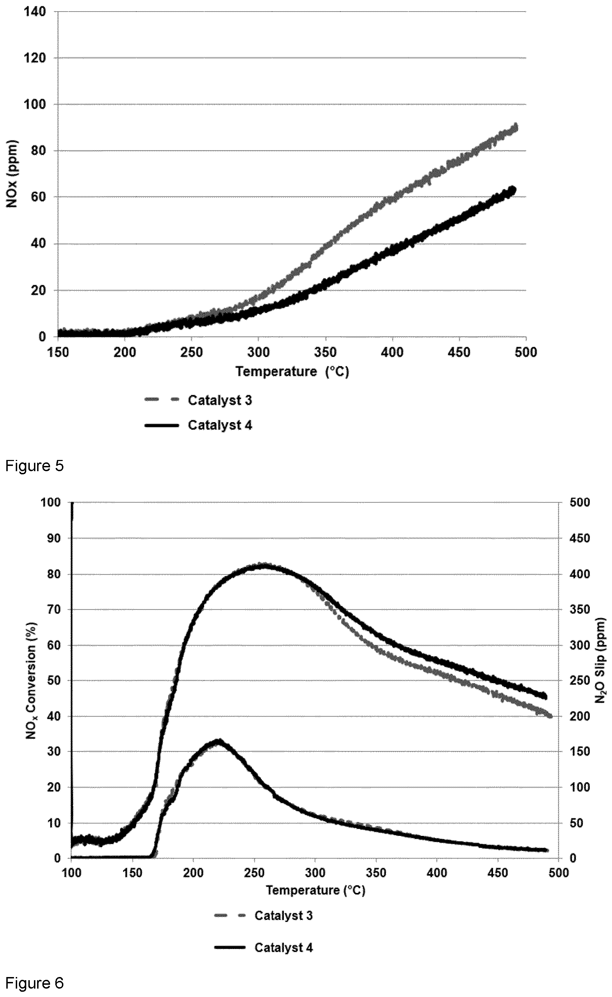

The catalyst articles were tested in 500ppm NH₃, 500ppm NO (where applicable, Figure 6), and 350ppm CO, at 180k SV. Each catalyst was tested after hydrothermal ageing at 750°C for 16 hours.

As shown in Figure 4, the addition of Ce has a minimal effect on the NH₃ oxidation function.

As shown in Figure 5, the addition of Ce decreases NOₓ remake after hydrothermal ageing.

As shown in Figure 6, the addition of Ce increases the NOₓ conversion above 300°C.

### Example 3

Two catalyst articles were prepared and tested to measure the impact of Ce on NH₃ conversion, N₂O make, NOₓ make, NOₓ conversion and N₂O slip.

The catalysts were prepared as in US20190176128. Briefly: a bottom layer was applied to a ceramic substrate using a washcoat coating comprising Pt/alumina/FER. The article was dried and calcined at about 500 °C for about 1 hour. The loading of Pt on the article was 3 g/ft³. A top layer was applied to the substrate coated with the bottom layer using a second washcoat comprising Cu-CHA and optionally a cerium salt. The article was dried and calcined at about 500°C for about 1 hour. The loading of CuCHA in the top layer was 2.4 g/in³.

Catalyst 6 contained a Cu:Ce ratio of 2.92:1 (relative to a Cu loading of 4.0 wt%).

Catalyst 5 contained Cu:Ce ratio of 1:0 (Cu loading was 4.0 wt%).

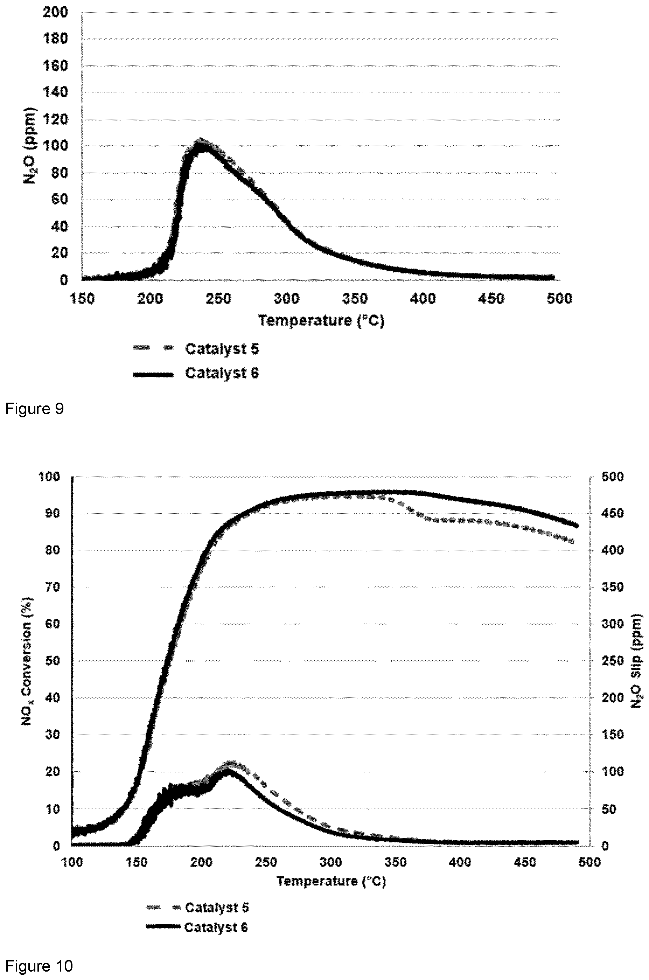

The catalyst articles were tested in 500ppm NH₃, 500ppm NO (where applicable, Figure 10), and 350ppm CO, at 180k SV. Each catalyst was tested without hydrothermal conditioning.

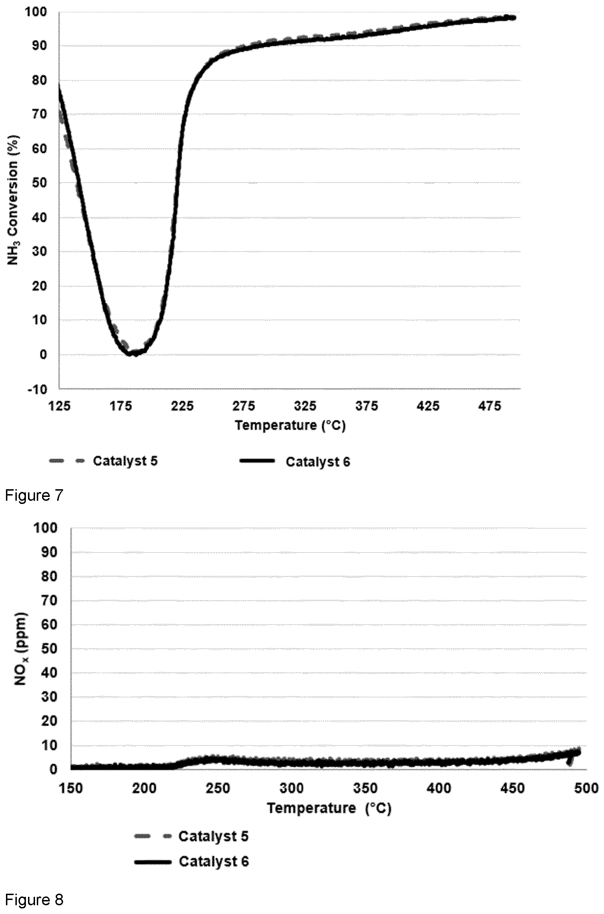

As shown in Figure 7, the addition of Ce has a minimal effect on the NH₃ oxidation function.

As shown in Figure 8, the addition of Ce has minimal effect on NOx make without hydrothermal conditioning.

As shown in Figure 9, the addition of Ce has minimal impact on N₂O make.

As shown in Figure 10, the addition of Ce increases the NOₓ conversion above 300°C, and decreases N₂O above 200°C.

### Example 4

The two catalyst articles listed in Example 3 were hydrothermally aged at 650°C for 100 hours.

Catalyst 5 was hydrothermally aged to create Catalyst 7.

Catalyst 6 was hydrothermally aged to create Catalyst 8.

The catalyst articles were tested in 500ppm NH₃, 500ppm NO (where applicable, Figure 3), and 350ppm CO, at 180k SV.

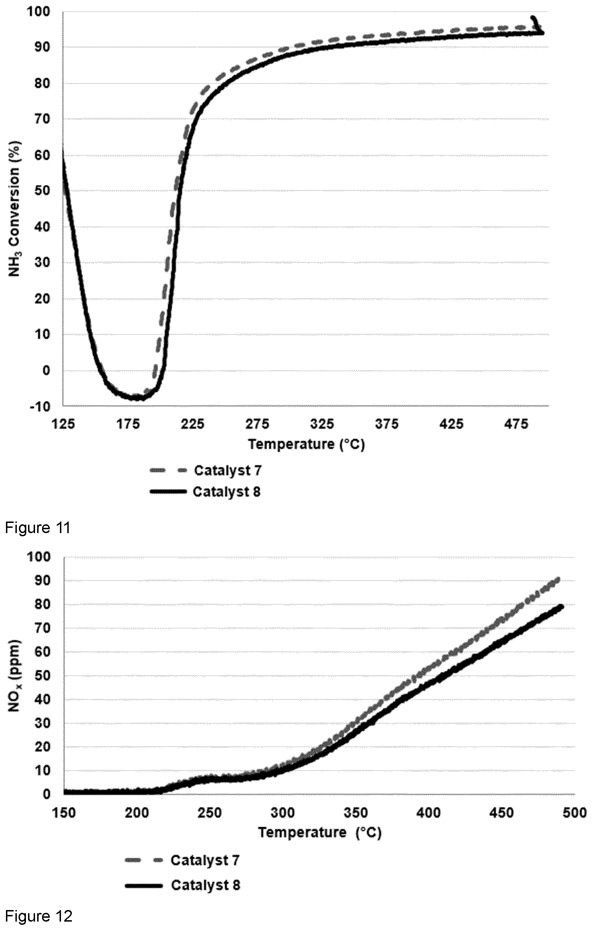

As shown in Figure 11, the addition of Ce has a minimal effect on the NH₃ oxidation function.

As shown in Figure 12, the addition of Ce decreases NOₓ remake after hydrothermal ageing.

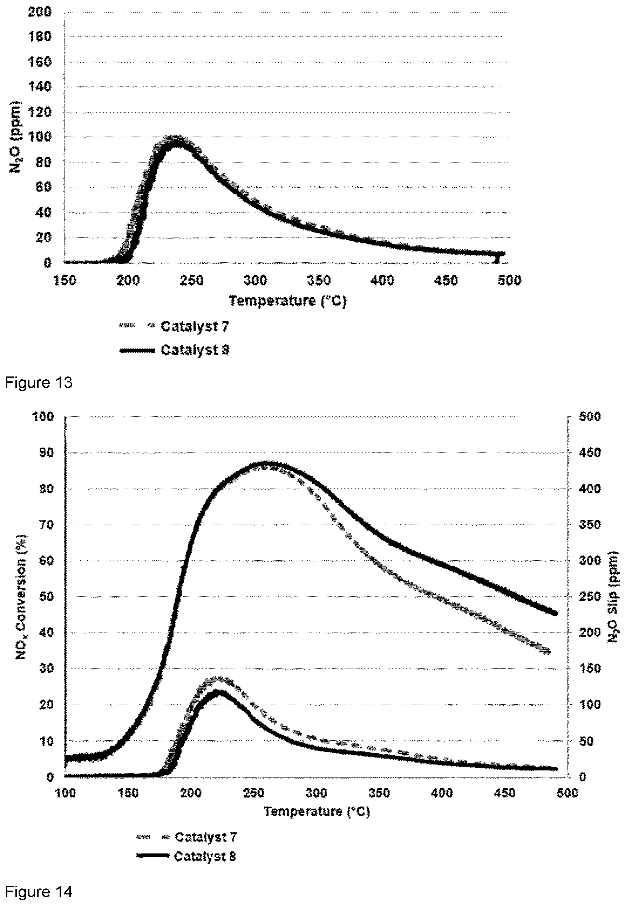

As shown in Figure 13, the addition of Ce has little impact on N₂O make.

As shown in Figure 14, the addition of Ce increases the NOₓ conversion above 250°C and decreases N₂O make.

### Example 5

Catalyst 5, catalyst 6, catalyst 7 and catalyst 8 were tested in 75ppm NH₃ at 120k SV.

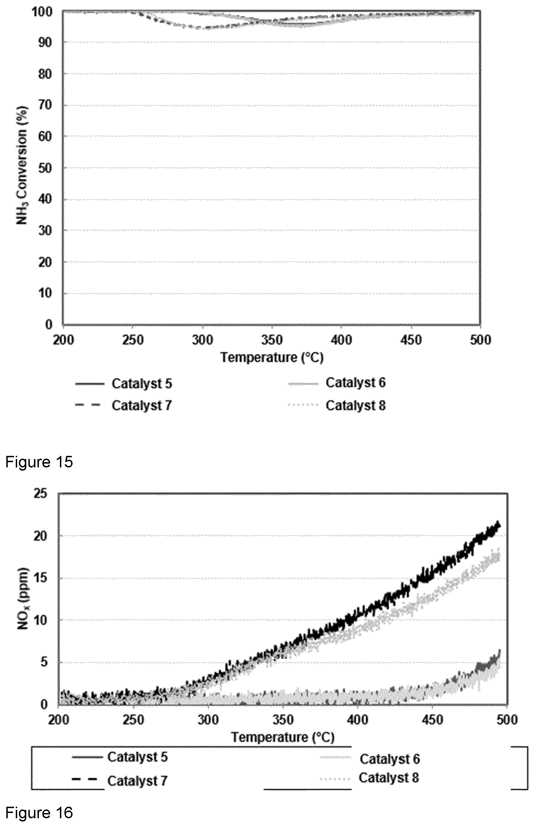

As shown in Figure 15, the addition of Ce has a minimal effect on the NH₃ oxidation function.

As shown in Figure 16, the addition of Ce decreases NOₓ remake after hydrothermal ageing.

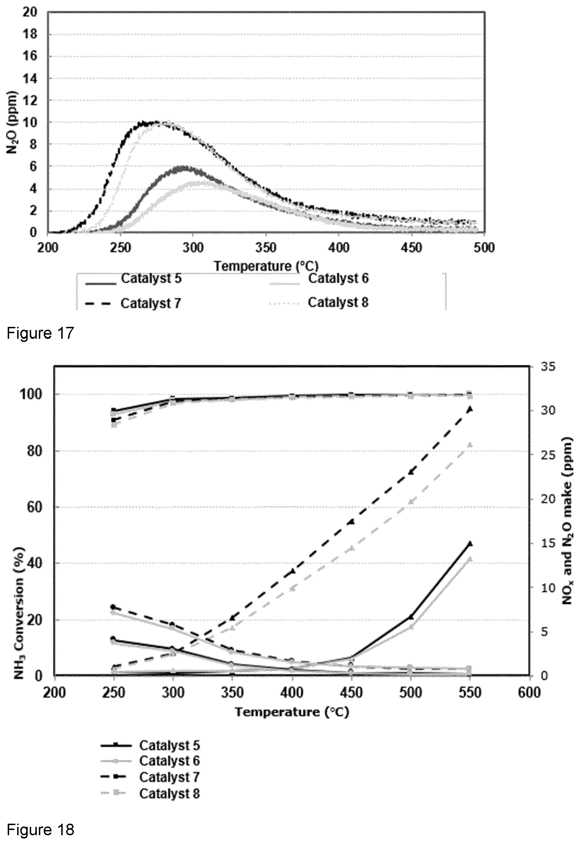

As shown in Figure 17, the addition of Ce decreases N₂O make for the conditioned and unconditioned catalysts.

As shown in Figure 18, the addition of Ce decreases NOₓ make for conditioned and unconditioned catalysts under steady-state conditions. The addition of Ce has a minimal effect on NH₃ conversion and N₂O.

### Example 6

Two catalyst articles were prepared and tested to measure the impact of Ce on NH₃ conversion, N₂O make, NOₓ make, NOₓ conversion and N₂O slip.

The catalysts were prepared as in US20190176128. Briefly: a bottom layer was applied to a ceramic substrate using a washcoat coating comprising Pt/alumina. The article was dried and calcined at about 500 °C for about 1 hour. The loading of Pt on the article was 5 g/ft³. A top layer was applied to the substrate coated with the bottom layer using a second washcoat comprising Cu-CHA and optionally a cerium salt. The article was dried and calcined at about 500°C for about 1 hour. The loading of CuCHA in the top layer was 2.4 g/in³.

Catalyst 11 contained a Cu:Ce ratio of 1.21:1 relative to a Cu loading of 3.3 wt%.

Catalyst 10 contained a Cu:Ce ratio of 2.39:1 relative to a Cu loading of 3.3 wt%.

Catalyst 9 contained a Cu:Ce ratio of 1:0 (Cu loading was 3.3 wt%).

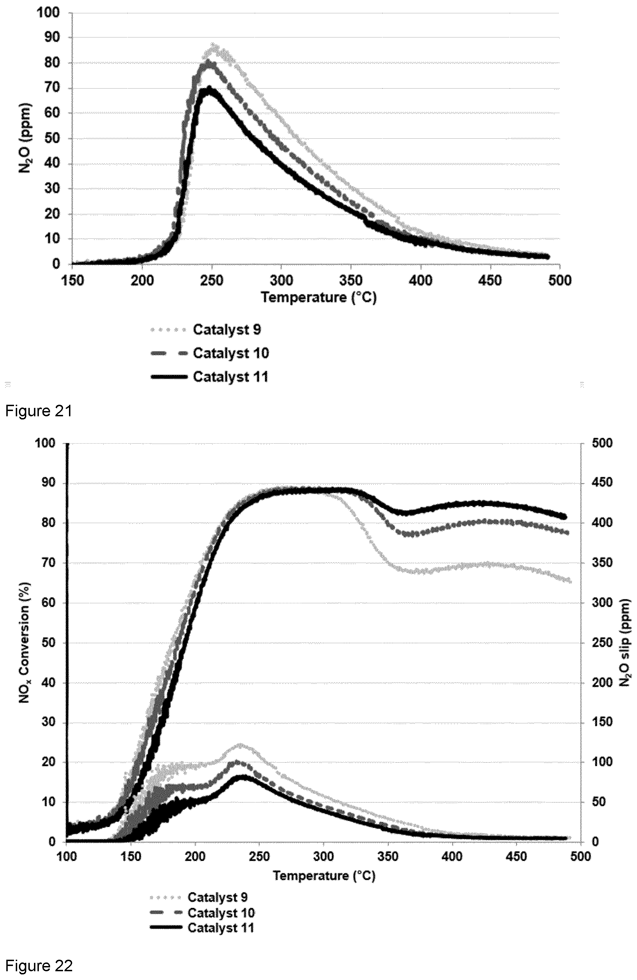

The catalyst articles were tested in 500ppm NH₃, 500ppm NO (where applicable, Figure 22), and 350ppm CO, at 180k SV. Each catalyst was tested without hydrothermal conditioning.

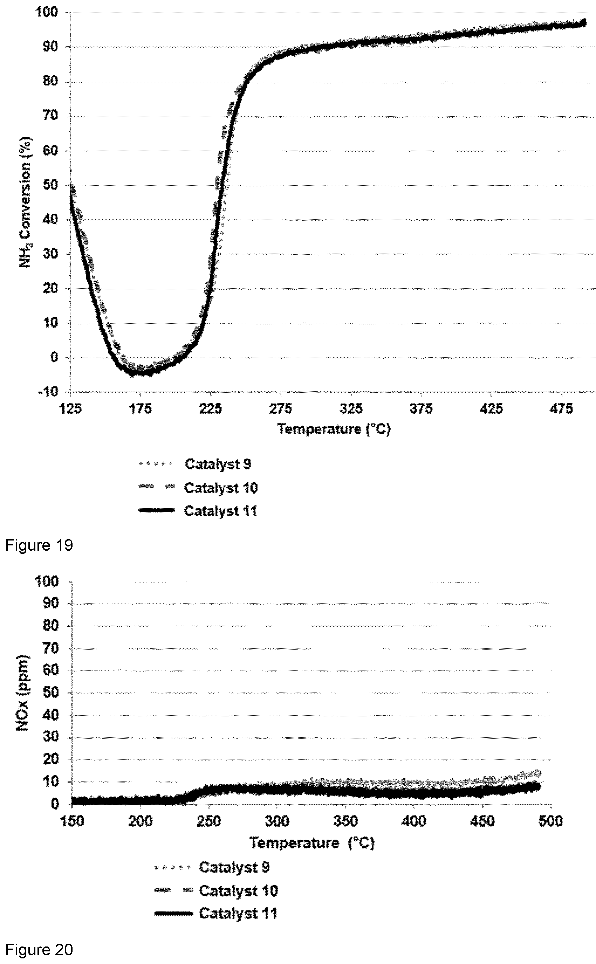

As shown in Figure 19, the addition of Ce has a minimal effect on the NH₃ oxidation function.

As shown in Figure 20, the addition of Ce has minimal effect on NOₓ make without hydrothermal conditioning.

As shown in Figure 21, increasing Ce content decreases N₂O make.

As shown in Figure 22, increasing Ce content increases the NOₓ conversion above 250°C, and decreases N₂O make.

## Claims

1. A catalytic article comprising a substrate having an inlet and an outlet; a first coating comprising platinum on a support; and a second coating comprising a SCR catalyst; wherein the SCR catalyst comprises a Cu-loaded molecular sieve and Ce.

2. The catalytic article of claim 1, wherein the SCR catalyst molecular sieve comprises a small pore molecular sieve, preferably wherein the SCR catalyst molecular sieve comprises AEI, CHA, or combinations thereof.

3. The catalytic article of any preceding claim, wherein the SCR catalyst molecular sieve is essentially free of any transition metals beyond Cu and Ce.

4. The catalytic article of any preceding claim, wherein the SCR catalyst molecular sieve comprises Cu and Ce in a combined amount of about 1 to about 10 % by weight based on the total weight of the Cu-loaded molecular sieve and Ce.

5. The catalytic article of any preceding claim, wherein the SCR catalyst molecular sieve comprises Cu in an amount of about 0.05 to about 7 % by weight based on the total weight of the Cu-loaded molecular sieve and Ce, preferably from about 0.5 to about 6 wt%, or from about 2 to about 5 wt%, even more preferably from about 2.5 to 4.5 wt%.

6. The catalytic article of any preceding claim, wherein the SCR catalyst molecular sieve comprises Ce in an amount of about 0.05 to about 5 % by weight based on the total weight of the Cu-loaded molecular sieve and Ce, preferably from about 0.1 to 4 wt%, e.g. from 0.5 to 3 wt% or from 1 to 2 wt%.

7. The catalytic article of any preceding claim, wherein the SCR catalyst molecular sieve comprises Cu and Ce in a weight ratio of about 0.1 to about 50, preferably from about 0.5 to about 10, e.g. from 1 to 5.

8. The catalytic article of any preceding claim, wherein the SCR catalyst further comprises a binder, preferably an alumina binder.

9. The catalytic article of any preceding claim, wherein the support comprises alumina.

10. The catalytic article of any one of claims 1 to 8, wherein the support comprises a molecular sieve, preferably wherein the molecular sieve is selected from the group of Framework Types consisting of CHA, LEV, AEI, AFX, ERI, SFW, KFI, DDR, ITE, BEA, MFI and FER, preferably CHA, AEI or FER.

11. The catalytic article of any preceding claim, wherein the platinum is present in an amount of 0.01-0.3 wt. % relative to the weight of the support of platinum + the weight of platinum.

12. An exhaust system comprising the catalytic article of any preceding claim and a means for introducing a reductant upstream of the catalytic article.

13. A method of reducing NOx remake and/or reducing N₂O make in an exhaust gas system, said method comprising providing the catalytic article of any one of claims 1 to 11 or the exhaust system of claim 12.
